(19) Europäisches Patentamt
European Patent Office
Office européen des brevets

(11) **EP 1 733 827 A1**

(12) **EUROPEAN PATENT APPLICATION**
published in accordance with Art. 158(3) EPC

(43) Date of publication:
**20.12.2006 Bulletin 2006/51**

(51) Int Cl.:
*B23B 5/18* (2006.01)       *B60R 13/02* (2006.01)
*D06M 11/72* (2006.01)      *D06M 13/292* (2006.01)
*D06M 15/41* (2006.01)      *D06M 15/423* (2006.01)
*D06M 23/12* (2006.01)

(21) Application number: **05709860.0**

(22) Date of filing: **08.02.2005**

(86) International application number:
**PCT/JP2005/001808**

(87) International publication number:
**WO 2005/082563 (09.09.2005 Gazette 2005/36)**

(84) Designated Contracting States:
**AT BE BG CH CY CZ DE DK EE ES FI FR GB GR HU IE IS IT LI LT LU MC NL PL PT RO SE SI SK TR**

(30) Priority: **26.02.2004 JP 2004051238**
**04.06.2004 JP 2004167397**

(71) Applicant: **NAGOYA OILCHEMICAL CO., LTD.**
**Tokai-shi,**
**Aichi 476-0001 (JP)**

(72) Inventors:
• **OGAWA, Masanori,**
**NAGOYA OILCHEMICAL CO., LTD.**
**Tokai-shi,**
**Aichi 4760001 (JP)**

• **HIRANO, Morimichi,**
**NAGOYA OILCHEMICAL CO., LTD.**
**Tokai-shi,**
**Aichi 4760001 (JP)**
• **WATANABE, Tsuyoshi,**
**NAGOYA OILCHEMICAL CO., LTD.**
**Tokai-shi,**
**Aichi 4760001 (JP)**

(74) Representative: **Vossius & Partner**
**Siebertstrasse 4**
**81675 München (DE)**

(54) **FLAME-RETARDANT POROUS SHEETS, MOLDINGS THEREOF, AND FLAME-RETARDANT ACOUSTICAL ABSORBENTS FOR AUTOMOBILES**

(57)     The object of the present invention is to provide a fiber sheet having good fire resistant property, an expanded synthetic resin sheet having good fire resistant property and a molded article thereof, and a fire resistant acoustic material for cars, which uses the molded article.

To attain the object, in the present invention, fire retardant capsules are adhered to the fiber sheet or the expanded synthetic resin sheet to provide a porous fire resistant sheet. When the fire retardant capsules are exposed to a high temperature, the synthetic film covering the fire retardant may break, exposing fire retardant, and giving fiber sheet or expanded synthetic resin sheet self extinguishing property. A molded article of the porous fire resistant sheet also has a good fire resistant property, and does not inhibit the ventilation property of the fiber sheet and the synthetic resin sheet, making said molded article useful as a fire resistant acoustic material for cars or buildings.

Fig. 1

EP 1 733 827 A1

**Description**

FIELD OF THE INVENTION

The present invention relates to a fire resistant fiber sheet used for fire resistant acoustic material for cars and buildings, a fire resistant expanded synthetic resin sheet, a molded article thereof, and a fire resistant acoustic material for cars.

BACKGROUND OF THE INVENTION

Hitherto a needled non-woven fabric or needled felt wherein fibers in web are intertwined by needling, a resin non-woven fabric or resin felt wherein fibers in web are bonded together by synthetic resin, or a fiber knit or woven cloth have been provided as an acoustic fiber sheet (See Patent Literatures).
JP 11-61616
JP 8-39596

DISCLOSURE OF THE INVENTION

PROBLEMS TO BE SOLVED BY THE INVENTION

It is required that said fiber sheet have fire resistant property together with acoustic property and heat insulating property. Hitherto, to give fiber sheet fire resistant property, a fire retardant such as tetrachlorophthalic acid, tetrabromophthalic acid, tetrabromobisphenol A, antimony trioxide, chlorinated paraffin, ammonium phosphate, ammonium polyphosphate, diguanidine phosphate, or the like is mixed or impregnated into said fiber sheet (See Patent Literatures 3 to 5).
Tokkaihei JP7-126913
Tokkaihei JP8-27618
Tokkaihei JP8-260245
Nevertheless, said fire retardants are very expensive, and strength, weatherability, or the like of fiber may be degraded by said fire retardants, and it is feared that when said fire retardant is contained in said fiber sheet, air permeability of said fiber sheet is deteriorated by said fire retardant, causing an infection in its acoustic property, with said fire retardant being apt to separate from said fiber sheet when resin solution is impregnated therein.

MEAN TO SOLVE SAID PROBLEMS

As a means to solve said problems, the present invention provides a porous fire resistant sheet characterized by a synthetic resin film covering fire retardant capsules, causing said fire retardant capsules to adhere to porous material. It is desirable that said fire retardant capsules be added to said porous material in an amount of between 5% and 80% by mass. It is also desirable that said fire retardant be water soluble and that said synthetic resin film be water insoluble. It is desirable that said porous material be fiber. It is desirable that said fibers are all hollowed, or mixture of solid and hollowed fibers, and that an additional fiber having a low melting point of below 180°C be mixed in with said fiber. It is desirable that synthetic resin binder be contained in said fiber in an amount of between 5 and 200 % by mass for fibers. It is also desirable that said synthetic resin binder be a water solution, and that water soluble resin be dissolved in said water solution. It is desirable that said synthetic resin binder be a phenolic resin, and that said phenolic resin be sulfomethylated and/or sulfimethylated. Furthermore, it is desirable that said porous material be an expanded synthetic resin, and that synthetic resin binder be contained in said expanded synthetic resin in an amount of between 5 and 200% by mass for said expanded synthetic resin. It is desirable that said synthetic resin binder be a water solution. It is desirable that water soluble synthetic resin be dissolved in said water solution. It is desirable that said synthetic binder be a phenolic resin, and that said phenolic resin be sulfomethylated and /or sulfimethylated. The present invention provides a molded article wherein said porous fire resistant sheet is molded into a prescribed shape. It is desirable that a ventilation resistance of said molded article be in a range of between 0.1 and 100kPa·s/m.
Furthermore, the present invention provides a laminated material wherein other porous sheet(s) is(are) laminated onto one or both sides of said porous fire resistant sheet. The present invention also provides a laminated material wherein other porous sheet(s) is (are) laminated onto one or both sides of said porous fire resistant sheet through thermoplastic resin film (s) having a thickness of between 10 and 200$\mu$m, and moreover, the present invention also provides a laminated material, wherein a hot melt adhesive powder is scattered onto one or both sides of said porous fire resistant sheet in an amount of between 1 and 100g/m$^2$, and said other porous material sheet(s) is (are) laminated onto said porous material sheet through said scattered layer of hot melt adhesive powder. The present invention also provides a molded article wherein a laminated material is molded into a prescribed shape. It is desirable that a ventilation resistance of said molded article be in the range of between 0.1 and 100 kPa·s/m. The present invention also provides a fire resistant acoustic material for cars made of a molded article.

EFFECTS OF THE INVENTION

**[ACTION]**

When the porous fire resistant sheet of the present invention, which is a fire resistant fiber sheet, fire resistant expanded synthetic resin sheet, or the like is exposed to a high temperature, said, fire retardant capsules expand to break said synthetic resin film, and said fire retardant covered with said synthetic resin film is exposed, giving said porous fire resistant sheet self extinguishing property. Said fire retardant capsules are particle like, and adhere to said porous fire resistant sheet so that said fire retardant capsules do not interfere with the ventilation property of said porous fire resistant sheet. In particular, in a case where said porous fire resistant sheet is a fire resistant fiber sheet, said fibers are preferably all hollowed, or mixture of solid and hollow fibers, to improve rigidity of said fiber sheet. Further, an additional fiber having preferably a low melting point of below 180°C is mixed in with said fiber, or the fibers of said fiber sheet are bound with synthetic resin binder, to improve its rigidity and get moldability.
Commonly, said synthetic resin binder is provided in a nonflammable and nonpoisonous water solution, which is impregnated into said porous fire resistant sheet. In a case where synthetic resin film of said fire retardant capsules is water insoluble, said synthetic resin film does not dissolve in said water solution, and said capsule does not break. In a case where water soluble resin is dissolved in said water solution, the adhesion of said fire retardant capsules to said porous fire resistant sheet is improved, and said water soluble resin acts as a release agent to release smoothly the resulting molded article from its mold when said porous fire resistant sheet is press-molded.

[EFFECTS]

Said porous fire resistant sheet of the present invention, such as a fire resistant fiber sheet, or fire resistant expanded synthetic resin sheet has high fire resistant and good acoustic properties. The present invention is described precisely below.

**BRIEF DESCRIPTION OF DRAWING**

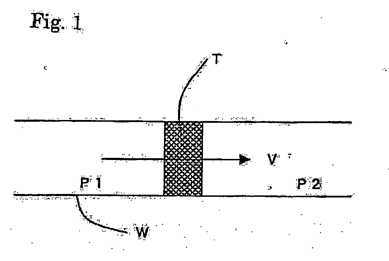

Fig. 1 is a drawing to illustrate measurement principle of ventilation resistance.

DETAILED DESCRIPTION OF PREFERRED EMBODIMENT

[Porous material]

The porous materials used in the present invention are such as fiber, expanded synthetic resin or the like. In the present invention, said porous material is used as porous sheet such as fiber sheet, or expanded synthetic resin sheet, or the like.

[Fiber]

The fiber used in the present invention includes synthetic fibers such as polyester fiber, polyamide fiber, acrylic fiber, urethane fiber, polyvinylchloride fiber, polyvinylidene chloride fiber, acetate fiber, polyolefin fibers like polyethylene fiber, polypropylene fiber, etc; alamide fiber, or the like; natural fibers such as wool, mohair, cashmere, camel hair, alpaca, vicuna, angora, silk, raw cotton, cattail fiber, pulp, cotton, coconut fiber hemp fiber, bamboo fiber, kenaf fiber, or the like; biodegradable fibers such as starch group fiber, polylactic acid group fiber, chitin chitsan group fiber, or the like; cellulose group synthetic fibers such as rayon fiber, staple fiber, polynosic fiber, cuprammonium rayon fiver, acetate fiber, triacetate fiber, or the like; inorganic fibers such as glass fiber, carbon fiber, ceramic fiber, asbestos fiber, or the like; and reclaimed fibers obtained by the fiberizing of fiber product made of said fibers. Said fiber is used singly, or two or more kinds of said fiber may be used in combination in the present invention. The fineness of said organic or inorganic fiber is commonly in the range of 0.01 to 30dtex, and the fineness of said natural vegetable fiber is commonly in the range of 0.01 to 1.0mm. Further, a hollow fiber is preferable. Said hollow fiber is made of a polyester, such as polyethylent telephthalate, polybutylene telephthalate, polyhexamethylene telephthalate, poly 1.4-dimethylcyclohexane telephthalate, or the like, a poliamide such as nylon 6, nylon 66, nylon 46, nylon 10, or the like, a polyolefine such as polyethylene, polypropylene, or the like, a thermoplastic resin such as an acrylic resin, polyurethane, polyvinylchloride, polyvinylidene chloride, acetate, or the like. Said hollow fiber is used singly or two or more kinds of said fiber may be used in combination.

Said hollow fiber is made by the well known method such as the melt spinning method, and a method wherein two kinds of thermoplastic resins are melt spun together, to produce a combined fiber, after which one of said two kinds of thermoplastic resin is selectively removed by dissolving it from said combined fiber.

One or more tuberous hollow part(s) whose cross section(s) is/are circular, elliptical, or the like is (are) formed in said hollow fiber, the ratio of hollow part(s) in said hollow fiber commonly being 5% to 70%, but preferably 10% to 50%. Said ratio of hollow part(s) indicates the rate of the cross section area of tuberous hollow part(s) to the cross section area of said fiber. Further, the fineness of said hollow fiber is in the range of between 1 and 50dtex, but preferably between 2 and 20dtex:

In a case where said hollow fibers are mixed in with common fibers, it is preferable that said hollow fibers be mixed in with common fibers in an amount of more than 10% by mass.

When said hollow fibers are used in said fiber sheet, the tube effect of said hollow fibers improves its rigidity.

Further, in the present invention, fibers having a low melting point of below 180°C may be used. Said low melting point fibers include, for example, polyolefine group fibers such as polyethylene fiber, polypropylene fiber ethylene-vinyl acetate copolymer fiber, ethylene-ethyl acrylate copolymer fiber, or the like, polyvinylchloride fiber, polyurethane fiber, polyester fiber, polyester copolymer fiber, polyamide fiber, polyamide copolymer fiber, or the like. Said fiber having a low melting point may be used singly, or two or more kinds of said fiber may be used in combination. The fineness of said low melting point fiber is commonly in the range of between 0.1dtex and 60dtex. Commonly, said low melting point fibers are mixed in with common fibers in an amount of 1 to 50% by mass.

[Fiber Sheet]

Fiber sheet of the present invention is provided commonly as nonwoven fabric or knit or woven fabric material. Said nonwoven fabric includes needle punched nonwoven fabric, resin nonwoven fabric using a synthetic resin binder as mentioned below, and a melted nonwoven fabric prepared by heating a web or a needle punched nonwoven fabric made singly of said low melting point fiber, or a fiber mixture containing said low melting point fiber and ordinary fiber so that low melting point fibers melt and said fibers adhere to each other, or the like.

[Expanded synthetic resin]

The expanded synthetic resin used in the present invention may include such as an expanded polyurethane having open cell (including soft type expanded polyurethane and hard type expanded polyurethane), an expanded polyolefin such as polyethylene, polypropylene, or the like, an expanded polyvinylchloride, expanded polystyrene, expanded acrylonitrile-styrene-butadiene copolymer, an expanded amino group resin such as melamine resin, urea resin or the like, an expanded epoxy resin, expanded phenol group resin made of phenol group compound such as monohydric phenol, polyhydric phenol or the like.

In the present invention, said expanded synthetic resin may be provided as said expanded synthetic resin sheet.

[Fire retardant capsules]

The fire retardant capsule used in the present invention consists of fire retardant powder, and a synthetic resin film covering said fire retardant powder. Said fire retardant may include such as ammonium salts such as, ammonium phosphate, ammonium polyphosphate, ammonium sulfamate, ammonium sulfate, ammonium silicate, ammonium bromide, ammonium chloride, or the like; phosphoric ester groups; guanidine salts such as guanidine sulfamate, guanidine methylolsulfamate, guanidine sulfate, monoguanidine phosphate, diguanidine phosphate, guanidine methylolphosphate, guanidine phosphoric ester salts, dimethylolguanidine phosphate, guanidine hydrobromide, guanidine tetrabromophthalate, guanidine hydrochloride, guanidine methylolhydrochloride, guanidine tetraborate, or the like; borax; water glass; metal salts such as stannate soda, tungstate soda, or the like. It is preferable to select a fire retardant compound generates no poisonous halogen containing gas at combustion. Said compound may include such as an ammonium phosphate, ammonium polyphosphate, ammonium sulfamate, ammonium sulfate, ammonium silicate or the like.

The synthetic resin used in said synthetic resin film may include thermoplastic resins such as polystyrene resin, polymethacrylate resin, acrylate-styrene polymer resin, polyolefin resin, poly(vinyl acetate) resin, polyamide resin, polyester resin or the like, and a thermosetting resin such as melamine resin, polyurea resin, polyphenol resin or the like. A water insoluble resin may preferably be selected.

Methods used to cover said fire retardant powder with said synthetic resin, include the interface polymerization method *in situ* polymerization method, coacervation method, liquid dryness method, melting dispersing cooling method;

covering method by suspending in gas, spraying-drying method, impact method in a high speed air current, or the like. The particle size of said fire retardant capsule may commonly set to be 0.5 to 60μm, but preferably 5 to 40μm. Commercial fire retardant capsules include such as TERRAJU C-60, C-70, C-80 (trade name, BUDENHEIM IBERICA COMMERCIAL S.A.) as a polyammonium phosphate group fire retardant capsule, NONEN B984-5 (trade name, MARUBISI OIL CHEMICAL CO., LTD.) as a phosphorus-nitrogen compound group fire retardant capsule, and EKSOLIT AP 462 (trade name CLARIANT (JAPAN) K.K.) as a polyammonium phosphate group fire retardant capsule, or the like.

[Thermally expandable particles]

In the present invention, thermally expandable particles may be added to said porous fire resistant sheet such as said fire resistant fiber sheet, fire resistant expanded synthetic resin sheet, or the like. Said thermally expandable particles consist of a thermoplastic resin having a low softening point, and a solvent having a low boiling point. Said thermoplastic resin having a low softening point may include, a (co)polymer of one or more kinds of monomer, for example, an aliphatic or cyclic acrylate such as methyl acrylate, ethyl acrylate, n-propyl acrylate, iso-propyl acrylate, n- butyl acrylate, iso-butyl acrylate, t-butyl acrylate, 2-ethyl-hexyl acrylate, cyclohexyl acrylate, tetrahydrofurfuryl acrylate, methyl methacrylate, ethyl methacrylate, n-propyl methacrylate, iso-propyl methacrylate, n-butyl methacrylate, iso-butyl methacrylate, 2-ethylhexyl methacrylate, cyclohexyl methacrylate, tetrahydrofurfuryl methacrylate, stearyl methacrylate, lauryl methacrylate, or the like; and/or methacrylate; a vinyl ether such as methyl vinyl ether, ethyl vinyl ether, n-propyl vinyl ether, n-butyl vinyl ether, iso-butyl vinyl ether, or the like; styrenic monomers such as styrene, α-methyl styrene, or the like; nitrile group monomers such as acrylonitrile, methacrylonitrile, or the like; vinyl aliphatic acids such as vinyl acetate, vinyl propionate, or the like; monomer groups including halogen, for example vinyl chloride, vinylidene chloride, vinyl fluoride, vinylidene fluoride, or the like; olefin group monomers such as ethylene, propylene, or the like; diene group monomers such as isoprene, chloroprene, butadiene, or the like; α,β-unsaturated carboxylic acids such as acrylic acid, methacrylic acid, itaconic acid, maleic acid, crotonic acid, atropic acid, citraconic acid, or the like; a hydroxyl group containing monomers such as 2-hydroxyethyl methacrylate, 2-hydroxyethyl acrylate, 2-hydroxypropyl methacrylate, 2- hydroxypropyl acrylate, allyl alcohol, or the like; an amide group such as acrylic amide, methacrylic amide, diacetone acrylic amide, or the like; an amino group containing vinyl monomers such as dimethylaminoethyl methacrylate, dimethylaminoethyl acrylate, dimethylaminopropyl methacrylate, dimethylaminopropyl acrylate, or the like; an epoxy group containing monomers such as glycidyl acrylate, glycidyl methacrylate, glycidyl allyl ether, or the like; further, water soluble vinyl monomers such as vinylpyrrolidone, vinylpyridine, vinylcarbazole, or the like; a hydrolysable silyl group containing vinyl monomers such as γ-methacryloxypropyltrimethoxysilane, vinyltriacetoxysilane, p-trimethoxysilylstyrene, p-triethoxysilylstyrene, p-trimethoxy silyl-α-methylstyrene, p-triethoxysilyl-α-methylstyrene, γ-acryloxypropyltrimethoxysilane, vinyltrimethoxysilane, N-β(N-vinylbenzylaminoethyl-γ-aminopropyl)trimethoxysilane hydrochloride, or the like; and a crosslinked (co)polymer of said (co)polymer, being crosslinked with a cross-linking agent, such as divinylbenzene, a polyvalent acrylate such as diethyleneglycol diacrylate, or the like; a methacrylate, diallylphthalate, allyl glycidyl ether, or the like; a thermoplastic resin having a softening point desirably below 180°C, such as a low softening point polyamide, low softening point polyester, or the like.

Said low boiling point solvent may include organic solvents having a boiling point below 150°C, such as n- hexane, cyclohexane, n-pentane, iso-pentane, n-butane, iso-butane, n-heptane, n-octane, iso-octane, gasoline, ethylether, acetone, benzene, or the like.

Said thermally expandable particles are made of expandable beads, wherein said low boiling point solvent is impregnated into said thermoplastic resin beads, microcapsules, wherein said low point solvent is sealed in a shell of said thermoplastic resin having a low softening point, or the like.

Commonly, said particles have a diameter in the range of between 0.5 and 1000μm.

Further, thermoexpandable inorganic particles such as vermiculite, perlite, shirasu balloon, or the like may be used as said thermally expandable particles of the present invention.

[Synthetic resin binder]

Synthetic resin binder is coated on or impregnated in to said porous sheet of the present invention, said sheet being for example, a fiber or expanded synthetic resin sheet, or the like.

Said synthetic resin binder is used for said nonwoven resin fabric, and other than said nonwoven resin fabric, a synthetic resin binder may be coated on or impregnated into needle punched nonwoven fabric, melted nonwoven fabric, and knit or woven cloth or the like.

Said synthetic resin used as the binder for said fiber sheet may include, for example, thermoplastic synthetic resins such as polyethylene, polypropylene, ethylene-propylene copolymer, ethylene-vinyl acetate copolymer, polyvinylchloride, polyvinylidenechloride, polystyrene, polyvinylacetate, fluoric resin, thermoplastic acrylic acid resin, thermoplastic polyester, thermoplastic polyamide, thermoplastic urethane resin, acrylonitrile-butadiene copolymer, styrene-butadiene copolymer, acrylonitrile-butadiene-styrene copolymer, ethylene-propylene copolymer, ethylene-propylene terpolymer, ethylene vinyl acetate copolymer, or the like; thermosetting resins such as urethane resin, melamine resin, heat hardening type acrylic acid resin, urea resin, phenolic resin, epoxy resin, a heat hardening type polyester, or the like, and further, a synthetic resin precursor which produces said synthetic resin such as a prepolymer, oligomer monomer, or the like may be used. Said prepolymer, oligomer or monomer may include urethane resin prepolymer, epoxy resin prepolymer, melamine resin prepolymer, urea resin prepolymer, phenol resin prepolymer, diallylphthalate prepolymer, acrylic oligomer, polyisocyanate, methacryl ester monomer, diallyphthalate monomer, or the like.

Said synthetic resin binder may be used singly, or two or more kinds of said synthetic resin may be used together, and said synthetic resin binder may commonly be provided as an emulsion, latex, water solution, organic solvent solution, or the like.

A desirable synthetic resin binder for use in the present invention is phenol group resin. Said phenol group resin used in the present invention is described below.

A phenol group resin is produced by the condensation reaction between a phenolic compound and an aldehyde and/or aldehyde donor. Said phenol group resin may be sulfoalkylated and /or sulfialkylated to improve its water solubility.

Said phenol group resin is impregnated into a green fiber sheet in the form of a precondensation polymer. Commonly, said precondensation polymer is prepared as a water solution, but if desired, a water-soluble organic solvent can also be used in the present invention. Said water-soluble organic solvent may be an alcohol, such as methanol, ethanol, isopropanol, n-propanol, n-butanol, isobutanol, sec-butanol, t-butanol, n-amyl alcohol, isoamyl alcohol, n-hexanol, methylamyl alcohol, 2-ethyl butanol, n-heptanol, n-octanol, trimethylnonylalcohol, cyclohexanol, benzyl alcohol, furfuryl alcohol, tetrahydro furfuryl alcohol, abiethyl alcohol, diacetone alcohol, or the like; ketones such as acetone, methyl acetone, methyl ethyl ketone, methyl-n-propyl ketone, methyl-n-butyl ketone, methyl isobutyl ketone, diethyl ketone, di-n-propyl ketone, diisobutyl ketone, acetonyl acetone, methyl oxido, cyclohexanone, methyl cyclohexanone, acetophenon, camphor, or the like; glycols such as ethylene glycol, diethylene glycol, triethylene glycol, propylene glycol, trimethylene glycol, polyethylene glycol, or the like; glycol ethers such as ethylene glycol mono-methyl ether, ethylene glycol mono-ethyl ether, ethylene glycol isopropyl ether, diethylene glycol mono-methyl ether, triethylene glycol monomethyl ether, or the like; esters of the above mentioned glycols such as ethylene glycol diacetate, diethylene glycol mono-ethyl ether acetate, or the like, and their derivatives; an ether such as 1,4-dioxane, or the like; a diethyl cellosolve, diethyl carbitol, ethyl lactate, isopropyl lactate, diglycol diacetate, dimethyl formamide, or the like.

(Phenol group compound)

The phenolic compound used to produce said phenolic resin may be monohydric phenol, or polyhydric phenol, or a mixture of monohydric phenol and polyhydric phenol, but in a case where only a monohydric phenol is used, formaldehyde is apt to be emitted when or after said resin composition is cured, so that polyphenol or a mixture of monophenol and polyphenol is desirably used.

(Monohydric phenol)

The monohydric phenols include alkyl phenols such as o-cresol, m-cresol, p-cresol, ethylphenol, isopropylphenol, xylenol, 3,5-xylenol, butylphenol, t-butylphenol, nonylphenol or the like; monohydric derivatives such as o-fluorophenol, m-fluorophenol, p- fluorophenol, o-chlorophenol, m-chlorophenol, p-chlorophenol, O-bromophenol, m-bromophenol, p-bromophenol, O-iodophenol, m-iodophenol, p-iodophenol, o-aminophenol, m-aminophenol, p-aminophenol, O-nitrophenol, m-nitrophenol, p-nitorophenol, 2,4-dinitorophenol, 2,4,6-trinitorophenol or the like; monohydric phenols of polycyclic aromatic compounds such as naphthol or the like. Each monohydric phenol can be used singly, or as a mixture thereof.

(Polyhydric phenol)

The aforementioned polyhydric phenols, include resorsin, alkylresorsin, pyrogallol, catechol, alkyl catechol, hydroquinone, alkyl hydroquinone, fluoroglrsin, bisphenol, dihydroxynaphthalene or the like. Each polyhydric phenol can be used singly, or as a mixture thereof. Resorsin and alkylresorsin are more suitable than other polyhydric phenols. Alkylresorsin in particular is the most suitable polyhydric phenols because alkylresorsin can react with aldehydes more rapidly than resorsin.

The alkylresorsins include 5-methyl resorsin, 5-ethyl resorsin, 5-propyl resorsin, 5-n-butyl resorsin, 4,5-dimethyl resorsin, 2,5-dimethyl resorsin, 4,5-diethyl resorsin, 2,5-diethyl resorsin, 4,5-dipropyl resorsin, 2,5-dipropyl resorsin, 4-methyl-5-ethyl resorsin, 2-methyl-5-ethyl resorsin, 2-methyl-5-propyl resorsin, 2,4,5-trimethyl resorsin, 2,4,5-triethyl resorsin, or the like.

A polyhydric phenol mixture produced by the dry distillation of oil shale, which is produced in Estonia, is inexpensive, and said polyhydric phenol mixture includes 5-metylresorcin, along with many other kinds of highly reactive alkylresorcin, in a large quantity, to be an especially desirable raw polyphenol material in the present invention.

In the present invention, said phenolic compound, and aldehyde and/or aldehyde donor (aldehydes), are condensed together. Said aldehyde donor refers to a compound or a mixture which emits aldehyde when said compound or said mixture decomposes. The aldehydes include formaldehyde, acetoaldehyde, propionaldehyde, chloral, furfural, glyoxal, n-butylaldehyde, caproaldehyde, allylaldehyde, benzaldehyde, crotonaldehyde, acrolein, phenyl acetoaldehyde, o-tolualdehyde, salicylaldehyde or the like. The aldehyde donors include paraformaldehyde, tiroxane, hexamethylenetetramine, tetraoxymethylene, or the like.

As described above, said phenolic resin is desirably sulfoalkylated and/or sulfialkylated, to improve the stability of said water soluble phenolic resin.

(Sulfomethylation agent)

The sulfomethylation agents used to improve the stability of the aqueous solution of phenol resins, include for example, water soluble sulfites prepared by the reaction between sulfurous acid, bisulfurous acid, or metabisulfirous acid, and alkaline metals, trimethyl amine, quaternary ammonium (e.g. benzyltrimethylammonium); and aldehyde additions prepared by the reaction between said water soluble sulfites and aldehydes.

The aldehyde additions are prepared by the addition reaction between aldehydes and water soluble sulfites as mentioned above, wherein the aldehydes include formaldehyde, acetoaldehyde, propionaldehyde, chloral, furfural, glyoxal, n-butylaldehyde, caproaldehyde, allylaldehyde, benzaldehyde, crotonaldehyde, acrolein, phenyl acetoaldehyde, o-tolualdehyde, salicylaldehyde, or the like. For example, hydroxymethane sulfonate, which is one of the aldehyde additions, is prepared by the addition reaction between formaldehyde and sulfite.

(Sulfimethylation agent)

The sulfimethylation agents used to improve the stability of the aqueous solution of phenol resins, include alkaline metal sulfoxylates of aliphatic or aromatic aldehyde such as sodium formaldehyde sulfoxylate (a.k.a. Rongalit), sodium benzaldehyde sulfoxylate, or the like; hydrosulfites (a.k.a. dithionites) of alkaline metals or alkaline earth metals such as sodium hydrosulfite, magnesium hydrosulfite or the like; a hydroxyalkanesulfinate such as hydroxymethanesulfinate or the like.

In the case of producing said phenol resins, if necessary, additives may be mixed in with said phenol resins as a catalyst or to adjust their pH. Such additives include acidic compounds and alkaline compounds. Said acidic compounds include inorganic acid or organic acid such as hydrochloric acid, sulfuric acid, orthophosphoric acid, boric acid, oxalic acid, formic acid, acetic acid, butyric acid, benzenesulfonic acid, phenolsulfonic acid, p-toluenesulfonic acid, naphthalene-$\alpha$-sulfonic acid, naphthalene-$\beta$-sulfonic acid, or the like; esters of organic acids such as dimethyl oxalate, or the like; acid anhydrides such as maleic anhydride, phthalic anhydride, or the like; salts of ammonium such as ammonium chloride, ammonium sulfate, ammonium nitrate, ammonium oxalate, ammonium acetate, ammonium phosphate, ammonium thiocyanate, ammonium imidosulfonate, or the like; halogenated organic compounds such as monochloroacetic acid, the salt thereof, organic halogenides such as $\alpha,\alpha$'-dichlorohydrin, or the like; hydrochloride of amines such as triethanolamine hydrochloride, aniline hydrochloride, or the like; urea adducts such as the urea adduct of salicylic acid, urea adduct of stearic acid, urea adduct of heptanoic acid, or the like; and N-trimethyl taurine, zinc chloride, ferric chloride, or the like.

Alkaline compounds include ammonia, amines; hydroxides of alkaline metal and alkaline earth metals such as sodium hydroxide, potassium hydroxide, barium hydroxide, calcium hydroxide, or the like; oxide of alkaline earth metal such as lime, or the like; salts of alkaline metal such as sodium carbonate, sodium sulfite, sodium acetate, sodium phosphate, or the like.

(Method of producing the phenol resins)

The phenol resins (the precondensation polymers) can be prepared using the usual method. The usual methods include method (a) comprising the condensation of a monohydric phenol and/or a polyhydric phenol and aldehydes; method (b) comprising the' condensation of a precondensation polymer and a monohydric phenol and/or a polyhyrdric phenol, wherein said precondensation polymer comprises a monohydric phenol and aldehydes, and/or polyhydric phenol and aldehydes; method (c) comprising the condensation of a precondensation polymer and a monohydric phenol and/or a polyhydric phenol, wherein said precondensation polymer comprises a monohydric phenol, a polyhydric phenol and aldehydes, method (d) comprising the condensation of a precondensation polymer consisting of a monohydric phenol and aldehydes, with a precondensation polymer consisting of a polyhydric phenol and aldehydes; and method (e) comprising the condensation of a precondensation polymer consisting of a monohydric phenol and aldehydes and/or precondensation polymers consisting of a polyhydric phenol resin and aldehydes, with a precondensation polymer consisting of monohydric phenol and polyhydric phenol and aldehydes.

In the present invention, the desirable phenolic resin is phenol-alkylresorcin cocondensation polymer. Said phenol-alkylresorcin cocondensation polymer provides a water solution of said cocondensation polymer (pre-cocondensation polymer) having good stability, and being advantageous in that it can be stored for a longer time at room temperature, compared with a condensate consisting of a phenol only (precondensation polymer). Further, in a case where said sheet is impregnated with said water solution by precuring, the resulting porous sheet such as a fiber sheet or expanded synthetic resin sheet has good stability and does not lose its moldability after longtime storage. Further, since alkylresorcin is highly reactive to aldehydes, and catches free aldehydes to react with, the content of free aldehydes in the resin can be reduced.

The desirable method for producing said phenol-alkylresorcin cocondensation polymer is first to create a reaction between phenol and aldehyde, to produce a phenolic precondensation polymer, and then to add alkylresorcin, and if desired, aldehyde, to said phenolic precondensation polymer, to create a reaction.

In the case of method (a), for the condensation of monohydric phenol and/or polyhydric phenol and aldehydes, the aldehydes (0.2 to 3 moles) are added to said monohydric phenol (1mole), then said aldehydes (0.1 mole to 0.8 mole) are added to the polyhydric phenol (1mole) as usual. If necessary, additives may be added to the phenol resins (the precondensation polymers). In said method(s), there is a condensation reaction from heating at 55°C to 100°C for 8 to 20 hours. The addition of aldehydes may be made at one time at the beginning of the reaction, or several separate times throughout the reaction, or said aldehydes may be dropped in continuously throughout the reaction.

In the case of sulfomethylation and/or sulfimethylation, the sulfomethylation agents and/or sulfimethylation agents may be added to the precondensation at an arbitrary time.

The addition of the sulfomethylation agents and/or sulfimethylation agents may be made any time, such as before, during, or after condensation.

The total amount of said sulfomethylation agent and/or sulfimethylation agent added is usually in the range of between 0.001 and 1.5 moles per 1mole of phenol. In a case where said amount added is less than 0.001 mole, the hydrophile of the resulting sulfomethylated and/or sulfimethylated phenolic resin is not adequate, and in a case where said amount added is more than 1.5 moles, the water resistance of the resulting sulfomethylated and/or sulfimethylated phenolic resin degrades. To provide excellent curing properties in the resulting precondensate and excellent physical properties in the cured resin, said amount to be added is preferably in the range of between 0.01 and 0.8 mole per 1 mole of phenol.

The sulfomethylation agents and/or sulfimethylation agents for sulfomethylation and/or sulfimethylation react with the methylol groups and/or aromatic groups, so that the sulfomethyl group and/or sulfimethyl group are introduced to the precondensation prepolymers.

The solution of precondensation polymers of sulfomethylated and/or sulfimethylated phenol resins is stable even in a wide range of acidic condition (e.g. pH=1.0) or alkaline condition, so that the solution can be cured under any conditions such as acid, neutral or alkaline. In the case of curing the precondensate under acidic condition, there is a decrease in the remaining methylol groups, so that no formaldehydes from the decomposed cured phenol resins appear.

In a case where a sulfomethylated and/or sulfimethylated phenolic resin is(are) used for a synthetic resin binder, a porous fire resistant sheet, such as a fire resistant fiber sheet, fire resistant expanded synthetic resin sheet, or the like, each having greater fire resistance, is produced, as compared with a case where nonsulfomethylated and/or nonsulfimethylated phenolic resin is(are) used.

Further, if desired, the phenol resins and/or precondensation polymers thereof may be copolycondensed with amino resin monomers such as urea, thiourea, melamine, thiomelamine, dicyandiamine, guanidine, guanamine, acetoguanamine, benzoguanamine, 2,6-diamino-1.3-diamine, or the like.

Further, curing agents such as an aldehyde and/or an aldehyde donor or an alkylol triazone derivative, or the like, may be added to said phenolic precondensation polymer (including precocondensation polymer).

As said aldehyde and/or aldehyde donor, the same aldehyde and/or aldehyde donor as used in the production of said phenolic precondensation polymer is (are) used, and an alkylol triazone derivative is produced by the reaction between urea group compound, amine group compound, and aldehyde and/or aldehyde donor. Said urea group compound used in the production of said alkylol triazone derivative may be such as urea, thiourea, an alkylurea such as methylurea, an alkylthiourea such as methylthiourea; phenylurea, naphthylurea, halogenated phenylurea, nitrated alkylurea, or the like, or a mixture of two or more kinds of said urea group compounds. In particular, a desirable urea group compound may be urea or thiourea. As amine group compounds, an aliphatic amine such as methyl amine, ethylamine, propylamine, isopropylamine, butylamine, amylamine or the like, benzylamine, farfuryl amine, ethanol amine, ethylmediamine, hexamethylene diamine hexamethylene tetramine, or the like, as well as ammonia are illustrated, and said amine group compound is used singly or two or more amine group compounds may be used together.

The aldehyde and/or aldehyde donor used for the production of said alkylol triazone derivative is (are) the same as the aldehyde and/or aldehyde donor used for the production of said phenolic precondensation polymer.

To synthesize said alkylol triazone derivatives, commonly 0.1 to 1.2 moles of said amine group compound(s) and/or ammonia, and 1.5 to 4.0 moles of aldehyde and/or aldehyde donor, are reacted with 1 mole of said urea group compound.

In said reaction, the order in which said compounds are added is arbitrary, but preferably, the required amount of aldehyde and/or aldehyde donor is (are) put in a reactor first, then the required amount of amine group compound(s) and/or ammonia is (are) gradually added to said aldehyde and/or aldehyde donor, the temperature being kept at below 60°C, after which the required amount of said urea group compound(s) is (are) added to the resulting mixture at 80 to 90°C, for 2 to 3 hours, being agitated to react together. Usually, 37% by mass of formalin is used as said aldehyde and/or aldehyde donor, but some of said formalin may be replaced with paraform aldehyde to increase the concentration of the reaction product.

Further, in a case where hexamethylene tetramine is used, the solid content of the reaction product obtained is much higher. The reaction between said urea group compound, said amine group compound and/or ammonia and said aldehyde and/or aldehyde donor is commonly performed in a water solution, but said water may be partially or wholly replaced by one or more kinds of alcohol(s), such as methanol, ethanol, isopropanol, n-butanol, ethylene glycol, diethlene glycol, or the like, and one or more kinds of other water soluble solvent(s), such as a ketone group solvent like acetone, methylethyl ketone, or the like can also be used as solvents.

The amount of said curing agent to be added is, in the case of an aldehyde and/or aldehyde donor, in the range of between 10 and 100 parts by mass to 100 parts by mass of said phenolic precondensation polymer (precocondensation polymer), and in the case of alkylol triazone derivatives, 10 to 500 parts by mass to 100 parts by mass of said phenolic precondensation polymer (precocondensation polymer).

Into said synthetic resin binder used in the present invention, further, inorganic fillers such as calcium carbonate, magnesium carbonate, barium sulphate, calcium sulphate, sulfurous acid calcium, calcium phosphate, calcium hydroxide, magnesium hydroxide, aluminium hydroxide, magnesium oxide, titanium oxide, iron oxide, zinc oxide, alumina, silica, diatomaceous earth, dolomite, gypsum, talc, clay, asbestos, mica, calcium silicate, bentonite, white carbon, carbon black, iron powder, aluminum powder, glass powder, stone powder, blast furnace slag, fly ash, cement, zirconia powder, or the like ; natural rubbers or their derivatives ; synthetic rubbers such as styrene-butadiene rubber, acrylonitrile-butadiene rubber, chloroprene rubber, ethylene-propylene rubber, isoprene rubber, isoprene-isobutylene rubber, or the like ; water-soluble macromolecules and natural gums such as polyvinyl alcohol, sodium alginate, starch, starch derivative, glue, gelatin, powdered blood, methyl cellulose, carboxymethylcellulose, hydroxy ethyl cellulose, polyacrylate, polyacrylamide, or the like; fillers such as calcium carbonate, talc, gypsum, carbon black, wood flour, walnut powder, coconut shell flour, wheat flour, rice flour, or the like ; surfactants ; higher fatty acids such as stearic acid, palmitic acid, or the like ; fatty alcohols such as palmityl alcohol, stearyl alcohol, or the like ; fatty acid ester such as butyryl stearate, glycerin mono stearate or the like ; fatty acid amides ; natural wax or composition wax such as carnauba waxes, or the like ; synthetic waxes: mold release agents such' as paraffin, paraffin oil, silicone oil, silicone resin, fluoric resin, polyvinyl alcohol, grease, or the like ; organic blowing agents such as azodicarbonamido, dinitroso pentamethylene tetramine, P, P'-oxibis(benzene sulfonylhydrazide), azobis-2,2'-(2-methylglopionitrile), or the like ; inorganic blowing agents such as sodium bicarbonate, potassium bicarbonate, ammonium bicarbonate or the like ; hollow particles such as shirasu balloon, perlite, glass balloon, foam glass, hollow ceramics, or the like; foamed bodies or particles such as foamed polyethylene, foamed polystyrene, foamed polypropylene, or the like ; pigments ; dyes; antioxidants ; antistatic agents ; crystallizers ; fire retardants such as a phosphorus compound, nitrogen compound, sulfur compound, boron compound, bromine compound, guanidine compound, phosphate compound, phosphate ester compound, amino resin, cyclic phosphonate, or the like ; expanded praphite; flameproof agents ; water-repellent agents ; oil-repellent agents ; insecticides ; preservatives ; wax ; lubricants ; antioxidants, ultraviolet absorbers ; plasticizers such as phthalic ester (ex. dibutyl phthalate(DBP), dioctyl phthalate(DOP), dicyclohexyl phthalate) and others(ex. tricresyl phosphate), can be added or mixed.

To impregnate said synthetic resin binder into a porous sheet such as said fiber sheet, said expanded synthetic resin sheet or the like, said porous sheet is usually dipped into a liquid synthetic resin or synthetic resin solution, or said liquid synthetic resin or synthetic resin solution is coated onto said fiber sheet by spraying, or by using a knife coater, roll coater, flow coater, or the like.

To adjust the synthetic resin content in said porous sheet into which said synthetic resin is impregnated or mixed, said sheet may be squeezed using a squeezing roll or press machine after said synthetic resin has been impregnated or mixed into said fiber sheet. As a result of said squeezing process, especially in a case where said porous material sheet is a fiber sheet, the thickness of said fiber sheet may be reduced but in a case where said hollow fibers are contained in said fiber sheet, said fiber sheet has high rigidity, so that the thickness of said fiber sheet may be elastically restored after squeezing, to ensure adequate thickness of said fiber sheet. In particular, in a case where said low melting point fibers are contained in said fiber sheet, it is desirable to heat said fiber sheet and melt said low melting point fibers, so as to bind the fibers with said melted fibers. Thus, the rigidity and strength of said fiber sheet is improved, so that the workability of said fiber sheet during the process of impregnating it with said synthetic resin may be improved, resulting in a remarkable restoration of the thickness of said fiber sheet after squeezing.

As described above, in a case where said hollow fibers are contained in said fiber sheet, said fiber sheet may be rigid, so that the content of said synthetic resin binder in said fiber sheet can be reduced, compared with said non hollow fiber containing fiber sheet.

After said synthetic resin is impregnated into said porous sheet, said porous sheet into which said synthetic resin has been impregnated may be dried at room temperature or by heating. In a case where said synthetic resin is thermoplastic, said synthetic resin is preferably put at its B-stage by heating and drying, to maintain the long term moldability of said porous sheet, said porous sheet being moldable at a low temperature for a short time.

Rigidity, moldability or the like are given to said porous sheet onto which said synthetic resin has been coated or impregnated into, and for said purposes, said synthetic resin is coated on or impregnated into said porous sheet in an amount of between 5 and 200% by mass, but preferably 10 and 100% by mass, and more preferably 20 and 70% by mass. In a case where the amount of said synthetic resin impregnated thereinto is below 5% by mass, the rigidity and moldability of said porous sheet are not improved, while in a case where the amount of said synthetic resin impregnated thereinto is beyond 200% by mass, the air permeability of said porous sheet is inhibited, diminishing its acoustic property.

[Porous fire resistant sheet (fire resistant fiber sheet)]

To adhere said fire retardant capsules to said fiber sheet, a method wherein said capsules are mixed into fibers and said fibers into which said capsules has been mixed are molded into a sheet, a method wherein said capsules are mixed into said synthetic resin binder in a case where said synthetic resin binder is coated on or impregnated into said fiber sheet, and a method wherein a water dispersion of said fire retardant capsules is sprayed onto the surface of said fiber sheet, and so on are applied. In a case where water soluble resin is dissolved in said dispersion, the adherence of said fire retardant capsules to said fiber sheet may be improved. Further, in a case where synthetic resin solution is coated on or impregnated into said fiber sheet, said fire retardant capsule water dispersion is preferably coated before said fiber sheet on which said synthetic resin solution is coated or impregnated into is dried, to adhere said fire retardant capsules strongly to said fiber sheet by said synthetic resin. Further, in a case where said synthetic resin solution is water solution, water soluble resin is preferably dissolved in said water solution to further improve the adherence of said fire resistant capsules to said fiber sheet.

[Fire resistant expanded synthetic resin sheet]

To adhere said fire retardant capsules to said expanded synthetic resin sheet, a method wherein said capsules are mixed into said synthetic resin binder in a case where said synthetic resin binder is coated on or impregnated into said expanded synthetic resin sheet, a method wherein a water dispersion into which said fire retardant capsules are dispersed is coated onto said expanded synthetic resin sheet by spray etc., are applied. Water soluble resin is preferably dissolved in said water dispersion to improve the adherence of said fire retardant capsules to said expanded synthetic resin sheet.

Further, in a case where said synthetic resin solution is coated on or impregnated into said expanded synthetic resin sheet, said fire retardant capsule water dispersion is preferably coated before said expandable synthetic resin sheet on which said synthetic resin solution is coated or impregnated into is dried, to adhere said fire retardant capsules strongly to said expanded synthetic resin sheet. Further, in a case where said synthetic resin solution is a water solution, a water soluble resin is preferably added and dissolved in said water solution, to further improve the adherence of said fire retardant capsules to said expanded synthetic resin sheet.

Said water soluble resin to be added to said fire retardant water dispersion and said synthetic resin water solution may include such as polysodium acrylate, partially saponificated polyacrylic ester, polyvinyalcohol, carboxymethyl cellulose, methyl cellulose, hydroxyethyl cellulose or the like, and further, include an alkalisoluble resin such as a copolymer of acrylic ester and/or methacrylic ester and acrylic acid and/or methacrylic acid, a slightly cross linked copolymer of acrylic ester and/or methacrylic ester and acrylic acid and/or methacrylic acid or the like. Said copolymer and slightly cross-linked copolymer are commonly provided as emulsion.

Said fire retardant capsules are commonly adhered to said porous sheet such as fiber sheet or expanded synthetic resin sheet or the like in an amount of between 5 and 80% by mass.

Porous material sheet of the present invention, being such as a fiber sheet, expanded synthetic resin sheet, or the like, is molded into a flat panel or prescribed shape, and to mold said porous sheet, a hot press is commonly applied for said molding, and in a case where thermally expandable particles are mixed into said fiber sheet, said press molding is carried out, limiting the thickness of said fiber sheet, since said thermally expandable particles expand during said press molding. As mentioned above, when said thermally expandable particles contained in said porous sheet are heated at a temperature higher than that at which they expand, limiting the thickness of said porous material sheet, said thermally expandable particles expand. In a case where said porous sheet is fiber sheet, the fibers around said particle are compressed when said particle expands, increasing the density of said fibers, and improving the rigidity of said fiber sheet. Nevertheless, the porosity of whole fiber sheet does not change, and so the weight of said fiber sheet is unchanged.

Said porous sheet of the present invention may be molded into a flat panel, and then molded into a prescribed shape by the hot press, or in a case where said fiber sheet contains a fiber having a low melting point, or a thermoplastic resin binder, said fiber sheet may be molded by cold pressing after said low melting point fiber or thermoplastic resin binder is softened by heating.

A plural number of said porous sheets, such as fiber sheets or expandable synthetic resin sheets, of the present invention may be laminated together.

The fiber sheet of the present invention is useful as a fire resistant acoustic material for a car such as the head lining of a car, dash silencer, hood silencer, engine under cover silencer, cylinder head cover silencer, outer dash silencer, dash silencer, fender liner silencer, cowl side silencer, floor mat, dash board, door trim or the like, or as a base board thereof, or for a reinforcement or surface layer material to be laminated onto said base board, an acoustic material, insulating material, building material or the like.

The ventilation resistance of a molded article made from said porous sheet of the present invention is preferably between 0.1 and 100kPa·s/m, wherein the criteria of said ventilation resistance is to express the degree of ventilation of said ventilated material. The measurement of said ventilation resistance is carried out by the stationary flow pressure difference measurement method. As shown in Fig.1, a test piece T is set in the cylindrical ventilation passage W, and the pressure difference is measured, said pressure difference being between the pressure P1 in said ventilation passage W at the start point side shown by the arrow in Figure 1 and pressure P2 in said ventilation passage W at the end point side as shown by the arrow in Figure 1, in the condition of a constant ventilation volume V (direction shown by arrow), the ventilation resistance being calculated using the following formula.

$$R = \triangle P / \dot{V}$$

Herein $\triangle P$ (=P1-P2): Pressure difference (Pa), V : ventilation volume for unit area (m$^3$/m$^2$·s)

Herein the relationship between the ventilation resistance R (Pa·s/m) and ventilation degree C (m/Pa·s) is as follows.

$$\dot{C} = 1 / \dot{R}$$

The ventilation resistance can be measured by the ventilation tester (Product name: KES-F8-AP1, KATO TECH CO., LTD. Stationary flow pressure difference measurement method). A molded article having a ventilation resistance between 0.1 and 100kPa·s/m has an excellent acoustic property.

Further, other materials such as surface layer material, back layer material, core material or the like may be laminated onto said porous sheet, such as fiber sheet, expanded synthetic resin sheet or the like. Further, other porous material sheet(s) such as fiber sheet may be laminated onto one or both sides of said porous sheet of the present invention through thermoplastic resin film. Said thermoplastic resin sheet is made of a thermoplastic resin such as polyolefine (including modified polyolefine) such as polyethylene, polypropylene, ethylenevinylacetate copolymer, ethylene-ethyl acrylate copolymer or the like, polyvinylchloride, polyurethane, polyester, polyester copolymer polyamide, polyamide copolymer or the like, or mixture of two or more kinds of said thermoplastic resin. Said laminated sheet may be manufactured by molding said thermoplastic resin film by extruding it through a T-die and then laminating said thermoplastic resin film onto said fire resistant fiber sheet, then further molding said laminated sheet by hot pressing.

Said thermoplastic resin film may be a porous film in which a lot of holes are preformed, or may be formed in said thermoplastic resin film by needling after said film is laminated onto said fire resistant fiber sheet, or for example, heated and alternately softened thermoplastic resin film, having been extruded through a T-die, is laminated onto said fiber sheet, and then said laminated fiber sheet is press-molded, to form a lot of fine holes in said film by fluffs of the surface on said fiber sheet. In this method, a process of forming a lot of holes in said film is not necessary, and the large number of fine holes provide a good acoustic property effect.

To form a large number of fine holes in said thermoplastic resin film, the thickness of said film is preferably set to be below 200μm. Nevertheless, in the case of said film having a thickness below 10μm, the interlaminar bonding strength of said laminated sheet may be little.

Further, to secure the ventilation of said laminated sheet, said porous material sheet may be bonded to another porous sheet with a hot melt adhesive powder such as polyethylene powder, polyamide powder, ethylene-vinylacetate copolymer powder, phenol group resin powder or the like. In this case, said hot melt adhesive powders are scattered on one porous sheet, while the other sheet is laminated by pressing it onto said porous sheet after said hot melt adhesive powder is softened by heating, and to secure its ventilation, the amount of said hot melt adhesive powder to be scattered is set to be below 100g/m². Nevertheless, in a case where the amount of said hot melt adhesive powder to be scattered is below 1g/m², the interlaminar bonding strength of said laminated porous sheet may be little. A molded article of said laminated porous sheet preferably has a ventilation resistance between 0.1 and 100kPa · s/m. Said molded article whose ventilation resistance is between 0.1 and 100kPa·s/m has an excellent acoustic property.

EXAMPLES of the present invention are described below but the scope of the present invention should not be limited by only said EXAMPLES.

EXAMPLE 1

Flame retardant capsules (particle size 15~20$\mu$m) wherein polyammonium phosphate is covered with melamine resin were mixed into a fiber web consisting of 60% by mass of polyester fiber (fineness: 12dtex,fiber length: 45mm), and 40% by mass of polyester fiber having a low melting point (fineness: 15dtex, fiber length: 40mm),the amount to be added being set to be 5, 20, 40, 60 and 80% by mass per unit weight of said fiber web, and each fiber web was heated to soften said low melting point polyester fiber and bind said fire retardant to said softened polyester fiber, to manufacture a fire resistant fiber sheet having a unit weight of 400g/m² and thickness of 20mm. The resulting fiber sheets were then each heated and molded by cold pressing to obtain molded sheets, each having a thickness of 5 nim.

COMPARISON

Molded sheets were obtained by the same procedure as in EXAMPLE 1 with the exception that the amounts of said fire retardant capsules to be added were set to be 1, 3, 100 and 120% by mass per unit weight of said fiber web.
The fire resistant property and appearance of each of the molded sheets obtained in EXAMPLE 1 and COMPARISON 1 were determined and the results are shown in Table 1.

Table 1

|  | Amount of fire retardant capsules to be added (%) | Fire resistant property UL94 | Appearance |
|---|---|---|---|
| EXAMPLE 1 | 5 | V- 2 | Sheet is soft and has a good appearance. |
|  | 20 | V- 1 | " |
|  | 40 | V-0 | " |
|  | 60 | V- 0 | " |
|  | 80 | V- 0 | Sheet surface is slightly hard. |
| COMPARISON 1 | 1 | Combustion | Sheet is soft and has a good appearance. |
|  | 3 | Combustion | " |
|  | 100 | V-0 | Sheet surface is hard and brittle. |
|  | 120 | V- 0 | Film of fire retardant is formed on the surface of sheet, and sheet has no fiber feeling. |

Referring to Table 1, in a case where the amount of said fire retardant capsules to be added per unit weight of said fiber web is below 5% by mass, the resulting molded sheet has poor fire resistant property and in a case where the amount of said fire retardant capsules to be added per unit weight of said fiber web is beyond 80% by mass, the surface of said molded sheet becomes hard and brittle.

EXAMPLE 2

A fiber web consisting of 75% by mass of polyester fiber (fineness: 13dtx, fiber length: 45mm), and 25% by mass of low melting point polyester fiber (softening point: 130°C; fineness: 12dtex, fiber length: 40mm) was heated to bind said fibers together with said softened low melting point polyester fiber, to prepare a fiber sheet(thickness: 20mm, unit weight: 400gm$^2$). Then a phenol-formaldehyde precondensation polymer solution (solid content: 50% by mass) was coated on and was impregnated into said fiber sheet as a synthetic resin binder with a roll, the amounts to be coated were respectively set to be 5, 10, 50, 100, 150 and 200% by mass.

Fire retardant capsules, wherein trimethyl phosphate was covered with a phenol group resin (particle size: 2 to 5μn) were then scattered onto both sides of each fiber sheet, the amount to be scattered being set to be 20% by mass (10% by mass for one side) per unit weight of said fiber sheet, and then each fiber sheet was heated at 130 to 140°C for 5 minutes, to dry and procure, obtaining a non-flammable fiber sheet on both sides of which fire retardant capsules were attached.

After precuring, each fiber sheet was their molded by hot pressing at 200°C for 60 seconds, obtaining a molded sheet having a thickness of 8 mm.

**COMPARISON 2**

Molded sheets having a thickness of 8mm were obtained using the same procedure as in EXAMPLE 2, with the exception that the amounts of said phenol-aldehyde precondensation polymer to be coated were set to be 3, 220 and 250% by mass per unit weight of said fiber sheet.

The fire resistance, acoustic absorptivity and ventilation resistance of each molded sheet was determined, and the results are shown in Table 2.

Table 2

| | Amount of precondensation polymer to be coated for fiber sheet (%) | Fire resistant property<br><br>UL94 | Acoustic absorptivity (%) (frequency Hz) | | | Ventilation resistance (kPa·s/m) |
|---|---|---|---|---|---|---|
| | | | 500 | 1000 | 6000 | |
| EXAMPLE2 | 5 | V- 2 | 20 | 45 | 30 | 0. 1 |
| | 10 | V-2 | 25 | 55 | 50 | 1. 6 |
| | 50 | V- 1 | 30 | 65 | 95 | 3. 7 |
| | 100 | V- 1 | 30 | 75 | 90 | 12. 3 |
| | 150 | V-0 | 30 | 60 | 85 | 38. 5 |
| | 200 | V-0 | 25 | 55 | 60 | 97. 2 |
| COMPARISON1 | 3 | V-2 | 10 | 30 | 20 | 0. 05 |
| | 220 | V-0 | 20 | 35 | 20 | 120.7 |
| | 250 | V-0 | 5 | 30 | 12 | 153.4 |

Referring to Table 2, in a case where the amount of said precondensation polymer (binder) to be coated is below 5% by mass, the resulting molded sheet has too little ventilation resistance, also worsening the acoustic absorptivity of said molded sheet in a wide range from low frequency to high frequency, and in a case where the amount of said precondensation polymer (binder) to be coated is 200% by mass, the resulting molded sheet has too high ventilation resistance, worsening the absorptivity of said molded sheet, in the wide range from low to high frequencies.

As mentioned above, acoustic absorptivity can be adjusted by the amount of binder used for coating.

EXAMPLE 3

A treatment solution containing 80 parts by mass of an acrylic resin emulsion (solid content 50% by mass) and 20 parts by mass of fire retardant capsules was prepared, in each capsule ammonium sulfamate being coated with urethane resin and said fire retardant capsules being dispersed in water in an amount of 50% by mass and size of each capsule being 0.5 to 2μm.

Said treatment solution was then impregnated into a spun bonded nonwoven fabric made of a low melting point polyester fiber and having a unit weight of 30g/m$^2$, the amount of said treatment solution to be coated being set to be 40% by mass as a solid with a polyamide powder (melting point 150°C, particle size 20 to 30μm) as a hot melt adhesive powder being scattered onto one side of said nonwoven fabric, the amounts of said polyamide powder to be scattered being set to be 1, 10, 50 and 100g/m$^2$, after which each nonwoven fabric was heated at 120 to 130°C for 5 minutes to dry the acrylic resin emulsion in each nonwoven fabric and bind said fire retardant capsules onto said nonwoven fabric, to obtain non-flammable non woven fabric sheet, on one side of which hotmet adhesive powder being attached.

The resulting nonwoven fabric sheet was then used as a surface material, and a glass wool having a unit weight 800g/m$^2$ was used as a base material, with a phenol group resin being coated onto said glass wool in an amount of 15% by mass per unit weight.

Said nonwoven fabric sheet was put onto said base material so as to cause said hot melt adhesive powder layer formed on one side of said nonwoven fabric sheet to contact the surface of said base material, after which said laminated sheet was molded by hot pressing at 210°C for 50 seconds, obtaining a molded sheet having a thickness of 8mm.

**COMPARISON 3**

A molded sheet having a thickness of 8mm was obtained using the same procedure in EXAMPLE 3 with the exception that the amount of said hot melt adhesive powder to be scattered was set to be 0.5 and 120g/m$^2$.

The fire resistant property, acoustic absorptivity, ventilation resistance and interlaminar bonding strength of each molded sheet obtained in EXAMPLE 3 and COMPARISON 3 were each determined, and the results are shown in Table 3.

| | Amount of adhesive to be coated (g/m$^2$) | Fire resistant property UL94 | Acoustic absorptivity (%) (frequency Hz) | | | Ventilation resistance (kPa·s/m) | Bonding strength (N·m/ 25mm) |
|---|---|---|---|---|---|---|---|
| | | | 500 | 1000 | 6000 | | |
| EXAMPLE 3 | 1 | V- 1 | 25 | 40 | 70 | 0.12 | 0. 12 |
| | 10 | V- 1 | 30 | 50 | 90 | 1. 5 | 0. 18 |
| | 50 | V- 1 | 30 | 70 | 85 | 7. 8 | 0. 20 |
| | 100 | V- 1 | 28 | 65 | 80 | 75. 0 | 0. 30 |
| COMPARAISON 3 | 0.5 | V-1 | 20 | 40 | 50 | 0. 08 | 0.02 |
| | 120 | V- 1 | 17 | 35 | 22 | 110. 0 | 0.30 |

Referring to Table 3, in a case where the amount of said hot melt adhesive powder to be scattered is below 1g/m$^2$, in COMPARISON 3, the interlaminar bonding strength radically declines, and in a case where the amount of said hot melt adhesive powder to be scattered is beyond 100g/m$^2$, the ventilation resistance becomes high, harming acoustic absorptivity

EXAMPLE 4

Seventy parts by mass of sulfomethylated phenol alkyl resorcin-formaldehyde precondensation polymer (solid content 50% by mass) and 30parts by mass of fire retardant capsule water dispersion (50% by mass, particle size 15 to 20$\mu$m) were mixed together to prepare a treatment solution wherein said fire retardant capsules were made by covering a polyammonium phosphate with melamine resin. Said treatment solution was then impregnated into a polyester fiber spun bonded nonwoven fabric having a unit weight of 40g/m$^2$ so that the amount of said treatment solution to be coated was set to be 50% by mass per unit weight, after which said nonwoven fabric was then dried at 130 to 140°C for 5 minutes to precure said sulfomethylated phenol-alkyl resorcin-formaldehyde precondensation polymer in said nonwoven fabric and to bind said fire retardant capsules to said nonwoven fabric to obtain a non flammable nonwoven fabric sheet. The resulting nonflammable nonwoven fabric sheet was used as a surface material, and said nonwoven fabric sheet was put on a base material of glass wool web, having a unit weight of 500g/m$^2$, onto which a phenol group resin was coated in an amount of 15% by mass per unit weight through polyethylene film. The thicknesses of said polyethylene film used in this EXAMPLE were 10, 50, 100 and 200$\mu$m respectively.

Each laminated sheet obtained was molded by hot pressing at 200°C for 45 seconds, to obtain a molded sheet having a thickness of 10$\mu$m.

EXAMPLE 4-1

Molded sheets, each having a thickness of 10mm, were obtained using the same procedure as in EXAMPLE 4, with the exception that phenol-alkyl resorcin-formaldehyde precondensation polymer was used instead of sulfomethylated phenol-alkyl resorcin-formaldehyde precondensation polymer.

COMPARISON 4

Molded sheets, each with a thickness of 10mm, were obtained using the same procedure as in EXAMPLE 4 with the exception that polyethylene film having thickness of 5, 220μm was used in each molded sheet.

The fire resistant property, acoustic absorptivity ventilation resistance, and inter laminar bonding strength of each molded sheet was determined through EXAMPLES 4 and 4-1 and COMPARISON 4, and the results are shown in Table 4.

Table 4

| | Thickness of film (μm) | Fire resistant property UL94 | Acoustic absorptivity (%) (frequency Hz) | | | Ventilation resistance (kPa·s/m) | Bonding strength (N·cm/ 25mm) |
|---|---|---|---|---|---|---|---|
| | | | 500 | 1000 | 6000 | | |
| EXAMPLE 4 | 10 | V-0 | 30 | 70 | 40 | 0.23 | 0.12 |
| | 50 | V- 0 | 40 | 97 | 60 | 7.8 | 0.18 |
| | 100 | V - 0 | 40 | 95 | 65 | 20.9 | 0.20 |
| | 200 | V - 0 | 35 | 75 | 45 | 95.3 | 0.30 |
| EXAMPLE 4-1 | 10 | V- 1 | 32 | 70 | 40 | 0.21 | 0.12 |
| | 50 | V - 1 | 40 | 95 | 60 | 0.75 | 0.19 |
| | 100 | V- 1 | 45 | 90 | 65 | 21.0 | 0.21 |
| | 200 | V- 1 | 35 | 78 | 45 | 95.1 | 0.32 |
| COMPARISON 4 | 5 | V-0 | 15 | 60 | 30 | 0.008 | 0.08 |
| | 220 | V-0 | 10 | 60 | 20 | 127.0 | 0.30 |

Referring to Table 4, in a case where the thickness of film is below 10μm, the inter laminar bonding strength and acoustic absorptivity both diminish, and in a case where the thickness of film is beyond 200μm, it has difficulty becoming finely porous, increasing its ventilation resistance, and diminishing its absorptivity. Further, each molded sheet using sulfomethylated or sulfimethylated phenol group resin for a synthetic resin binder has a greater fire resistant property than each of the molded sheets using non sulfomethylated or nonsulfimethylated phenol group resin for synthetic resin binder.

EXAMPLE 5

A fiber web containing 60% by mass of polyester fiber (fineness: 6dtex, fiber length: 25mm), 15% by mass of low melting point polyester fiber (fineness: 12dtex, fiber length: 35mm) and 25% by mass of kenaf fiber (fiber diameter 0.1 to 0.3mm, fiber length: 35mm) was prepared, and said fiber web was needle punched to obtain a fiber sheet having a unit weight of $600g/m^2$ and a thickness of 10mm.

A treatment solution was prepared by mixing 80parts by mass of sulfimethylated phenol-resorcin-formaldehyde precondensation polymer (solid contant 50% by mass), and 20part by mass of fire retardant capsules, wherein each capsule was made by covering poly ammonium phosphate with a melamine resin, the particle size of said capsules being 10 to 15μm.

Said treatment solution was impregnated in said fiber sheet in an amount of 50% by mass per unit weight as a solid, after which said fiber sheet was dried at 100 to 130°C for 5 minutes to precure said fiber sheet, and obtain a nonflammable fiber sheet. After procuring, said fiber sheet was molded by hot pressing at 210°C for 45 seconds, to obtain a molded sheet having thickness of 8mm.

EXAMPLE 5-1

A molded sheet having a thickness of 8mm was obtained using the same process as in EXAMPLE 5, with the exception that phenol-alkyl resorcin-formaldehyde precondensation polymer was used instead of sulfimethylated phenol-alkyl resorcin-formaldehyde precondensation polymer.

COMPARISON 5

A molded sheet, having a thickness of 8mm was obtained using the same procedure as in EXAMPLE 5, with the exception that polyammonium phosphate was used instead of said fire retardant capsules.

The fire resistant property, the fire resistant property after water-heat cycle, acoustic absorptivity and ventilation resistance of each molded sheet obtained in EXAMPLE 5, EXAMPLE 5-1, and COMPARISON 5 were determined and the results are shown in Table 5.

Table 5

| | Fire resistant property UL94 | Fire resistant property after water-heat cycle | Acoustic absorptivity (%) (frequency Hz) | | | Ventilation resistance (kPa·s/m) |
|---|---|---|---|---|---|---|
| | | UL94 | 500 | 1000 | 6000 | |
| EXAMPLE 5 | V-0 | V-0 | 20 | 64 | 95 | 3. 9 |
| EXAMPLE 5-1 | V- 1 | V-1 | 25 | 65 | 95 | 3. 8 |
| COMPARISON 5 | V-0 | Combustion | 20 | 60 | 80 | 3. 0 |

Referring to Table 5, the molded sheet of COMPARISON 5, in which noncapsulated fire retardant was used, has a far weaker fire resisting property after the water-heat cycle as compared to the molded sheets of EXAMPLE 5 and EXAMPLE 5-1, in which capsulated fire retardant was used.

The test methods for the molded sheets obtained in the above and below described EXAMPLES and COMPARISONS are as follows.

1) Fire resistant property UL94: According to UL94 standard.
2) Appearance: Optical observation of the appearance of the molded sheet.
3) Fire resistant property after the water-heat cycle: the molded sheet was dipped into water at $40\pm2°C$ for one hour and, then dried at $100\pm2°C$ for 3hours. Said procedure was repeated 10 times (10 cycles), and after which the molded sheet was left standing for 8 hours before testing according to UL94 standard.
4) Acoustic absorptivity: According to JIS A 1405 (the perpendicular incidence acoustic absorptivity detection method by the pipe method for building materials according to JIS A 1405.
5) Ventilation resistance: detected by the breathability tester (Tester Name: KES-F8-API KATOTEC CO., LTD. Stationary flow pressure difference measurement method).
6) Bonding strength: Interlaminar bonding strength between the surface material and the base material was determined according to JIS K 6854-2. Stretching speed: 100mm/min.,the width of the sample 25mm, 180°C peel test.

EXAMPLE 6

A fiber web consisting of 60% by mass of polyester fiber (fineness: 6dtex, fiber length: 60mm) and 40% by mass of polypropylene fiber (fineness: 8dtex, fiber length: 45mm) was prepared. Said fiber web was then heated at a temperature higher than that of the melting point of said polypropylene fiber, to prepare a fiber sheet in which said melted polypropylene acts as a binder, the unit weight of said fiber sheet being $1000g/m^2$, with a thickness of 20mm. A treatment solution was prepared by mixing 50parts by mass of "TERRAJU C-60" (trade name: BUDENHEIM IBERICA COMMERCIAL S. A.) as the fire retardant capsules, in an acrylic resin emulsion (solid content 50% by mass). Said treatment solution was then impregnated into said fiber sheet in an amount of 50% by mass per unit weight, and the resulting fiber sheet was then heated and dried at 120 to 130°C for 7 minutes, to obtain a nonflammable fiber sheet. Said fiber sheet was then heated at 200°C for a few minutes, after which it was molded into a prescribed shape using the cold press machine.

The fire resistant property of said molded fiber sheet was V-0 in UL94 standard, with a ventilation resistance of 1.6kPa·s/m, said molded sheet having an excellent acoustic absorptivity, water proof property, and weatherability, and was useful as a room partition silencer or head lining of a car.

EXAMPLE 7

A treatment solution containing 40parts by mass of sulfomethylated phenol-alkylresorcin-formaldehyde precondensation polymer solution (solid content 60% by mass), 3 parts by mass of a fluorine group water-oil repellent agent (solid content 40% by mass), 1 part by mass of a carbon black dispersion (solid content 30% by mass), 2parts by mass of fire retardant containing phosphorus and nitrogen (solid content 40% by mass) and 54parts by mass of water was prepared.

Said treatment solution was impregnated into a polyester spunbonded nonwoven fabric, having a unit weight of 40g/m$^2$, the amount of said treatment solution to be coated being set to be 50% by mass per unit weight, following which a dispersion in which 20parts by mass of fire retardant capsules "EXOLIT AP 462" (trade name, Clariant (Japan) K. K.) were dispersed in 80parts by mass of water was sprayed on one side of the resulting nonwoven fabric in an amount 30% of by mass as a solid after which said nonwoven fabric was dried and precured at 120 to 140°C for 3 minutes to obtain a nonflammable nonwoven fabric sheet. Said nonwoven fabric sheet was then used as a surface material, with a glass wool web having a unit weight of 600g/m$^2$, on which a phenol resin was coated in an amount of 15% mass per unit weight being used as a base material.

Said nonwoven fabric sheet was put onto said base material so as to cause said fire retardant capsules on said nonwoven fabric sheet to contact said base material and the resulting laminated material was then molded by hot pressing into a prescribed shape at 210°C for 50 seconds. The fire resistant property of the resulting molded laminated material was 5 VA in UL 94 standard, with a ventilation resistance of 7.9kPa·s/m, said molded laminated material having an excellent acoustic absorptivity, water proof property, and weatherability, and also being useful as a hood silencer, outer dash silencer, engine undercover silencer and cylinder headcover silencer for a car.

EXAMPLE 8

A fiber sheet having a unit weight of 80g/m$^2$ was prepared by needle punching a fiber web consisting of 65% by mass of a polyester fiber (fineness: 3.5dtex, fiber length: 30mm), 20% by mass of a hollow polyester fiber (hollow ratio: 30%, fineness: 7dtex, fiber length:50mm) and 15% by mass of a low melting point polyester fiber (softening point: 120°C, fineness: 5dtex, fiber length: 50mm).

A treatment solution containing 5 parts by mass of a fluorine group water-oil repellant agent (solid content 40% by mass), 50parts by mass of polyvinyl alcohol (10% by mass solid content water solution, saponification value: 99mol%), and 45parts by mass of water was prepared.

Said treatment solution was then impregnated into said fiber sheet in an amount of 10% by mass per unit weight, after which a mixture of 60parts by mass of polyamide hot melt adhesive powder (particle size: 15μm, melting point 140°C), and 40parts by mass of "TERRAJU C-80" (trade name: BUDENHEIM IBERICA COMMERCIAL, S. A.) as fire retardant capsules was scattered onto one side of said fiber sheet, the amount of said mixture to be scattered being set to be 20% by mass for per weight, following which said fiber sheet was heated and dried at 145°C for 5 minutes, to bind said fire retardant capsules onto said fiber sheet with said polyvinyl alcohol and hot melt adhesive, to obtain a nonflammable fiber sheet. The resulting fiber sheet was then used as a surface material, and a glass wool web having a unit weight of 400g/m$^2$, onto which a phenol resin was coated in an amount of 15% by mass was used as a base material. Said surface material was put onto said base material so that said fire retardant capsules on said surface material contact said base material, the resulting laminated material being molded by hot pressing at 180°C for 60 seconds to obtain a molded laminated material. The fire resistant property of said molded laminated material was V-0 in UL94 standard, with a ventilation resistance of 7.1 kPa·s/m, said molded laminated material having an excellent acoustic absorptivity water proof property, and weatherability, and being useful as a hood silencer, outer dash silencer, dash silencer, and cowl side silencer.

EXAMPLE 9

A molded fiber sheet was prepared using the same procedure as in EXAMPLE 7, with the exception that a polyester fiber spun bonded nonwoven fabric, having a unit weight of 40g/m$^2$, on one side of which a porous polyethylene film with a thickness of 30μm was laminated, said fire retardant capsules being coated onto said polyethylene film, was used in stead of said polyester spunbonded non woven fabric having a unit weight of 40g/m$^2$.

The fire resistant property of said molded fiber sheet was V-0 in UL94 standard, with a ventilation resistance of 54.5 kPa·s/m, said molded fiber sheet having an excellent acoustic absorptivity, water proof property, and weatherability, and said molded fiber sheet being useful as a hood silencer or nonflammable sound absorber for domestic electrical appliances and building materials.

EXAMPLE 10

A fiber web consisting of 60% by mass of polyester fiber (fineness: 0.5dtex, fiber length: 65mm), 25% by mass of low melting point polyester fiber (fineness: 16dtex, fiber length: 40mm), 10% by mass of hemp fiber (fiber diameter: 0.02 to 0.2mm, fiber length: 40mm), and 5% by mass of bamboo fiber (fiber diameter: 0.1 to 0.2mm, fiber length: 10 to 30mm), was prepared. Said fiber web was heated to soften said low melting point polyester fiber to bind said fibers in said fiber web, and manufacture a fiber sheet having a unit weight of 500g/m$^2$, and a thickness of 20mm.
A treatment solution was prepared by mixing 65parts by mass of sulfimethylated phenol-5 methyl resorcin-formaldehyde precondensation polymer (solid content 45% by mass), 30parts by mass of "TERRAJU C-70" (trade name: BUDENHEIM IBERICA COMMERCIAL S. A.) as fire retardant capsules, and 5parts by mass of a paraffin wax emulsion (solid content 50% by mass).
Said treatment solution was then impregnated into said fiber sheet in an amount of 50% by mass per unit weight as a solid, after which said fiber sheet was then heated and precured at 100 to 120°C for 7 minutes to obtain a nonflammable fiber sheet. Said fiber sheet was then molded into a prescribed shape by hot pressing at 200°C for 40 seconds.
The fire resistant property of said molded fiber sheet was V-0 in UL94 standard, with a ventilation resistance of 4.8kPa·s/m, said molded fiber sheet having an excellent acoustic absorptivity, weatherability and high rigidity, being useful as a nonflammable sound absorber for domestic electrical appliances.

EXAMPLE 11

A web consisting of 70% by mass of a regenerated fiber, obtained by picking used fiber product such as clothing, car interior, or the like and 30% by mass of polypropylene fiber was prepared.
A powder mixture, wherein 80parts by mass of "TERRAJU C-70" (trade name: BUDENHEIM IBERICA COMMERCIAL S. A.) as a fire retardant capsules and 20parts by mass of expandable graphite (temperature to start expansion: 300°C, expansion rate 150times, particle size: 40$\mu$m) were uniformly mixed, was mixed into said web. The resulting web into which said powder mixture was mixed, was then heated to soften said polypropylene fiber and bind uniformly said fire retardant capsules and expandable graphite to the fibers in said web with said softened polypropylene fiber to obtain a nonflammable fiber sheet, having a unit weight of 150g/m$^2$, and a thickness of 30mm. The resulting nonflammable fiber sheet was then heated and molded into a prescribed shape by cold pressing. The fire resistant property of said molded fiber sheet was V-0 in UL94 standard, with a ventilation resistance of 2.8kPa·s/m, said molded fiber sheet having an excellent acoustic absorptivity, a moisture proof property and weatherability, and being useful as a dash silencer, floor mat, room partition silencer for a car.

EXAMPLE 12

A web consisting of 50% by mass of polyester fiber (fineness: 12dtex, fiber length: 35mm), 15% by mass of low melting point polyester fiber (softening point: 110°C, fineness: 18dtex, fiber length: 30mm), and 35% by mass of polylactic acid fiber (fineness: 15dtex, fiber length: 40mm) was needle punched to prepare a fiber sheet having a unit weight of 60g/m$^2$. A polyethylene film having a thickness of 25$\mu$m was laminated onto one side of said fiber sheet.
A treatment solution was prepared by mixing 78parts by mass of sulfomethylated phenol-alkylresorcin-formaldehyde precondensation polymer, 20parts by mass of polyammonium phosphate (particle size: 15~20$\mu$m) covered with a melamine resin and treated with triazine as a fire retardant, and 2parts by mass of a carbon black dispersion (solid content 30% by mass).
Said treatment solution was then impregnated into said fiber sheet in an amount of 40% by mass per unit weight, and the resulting fiber sheet was then dried and precured at 140 to 150°C, to obtain a nonflammable fiber sheet. The resulting nonflammable fiber sheet was then used as a surface material and said fiber sheet was put onto a base material which was precured nonflammable fiber sheet obtained in EXAMPLE 10, so as to cause the polyethylene film on said surface material to contact the surface of said base material, and the resulting laminated fiber sheet was then molded into a prescribed shape by hot pressing at 200°C for 50 seconds. The fire resistant property of the resulting molded laminated fiber sheet was V-0 in UL94 standard, with a ventilation resistance of 60kPa·s/m, said molded laminated fiber sheet being useful as a dash silencer and floor mat for a car.

**EXAMPLE 13**

A web consisting of 50% by mass of polyester fiber (fineness: 12dtex, fiber length: 60mm), 30% by mass of aramid fiber (fineness: 8dtex, fiber length: 50min), 10% by mass of low melting point polyamide fiber (softening point: 120°C, fineness: 10dtex, fiber length: 45mm) and 10% by mass of kenaf fiber (fiber diameter 0.1 to 0.3mm, fiber length: 50mm) was prepared, and said web was then heated at a temperature higher than that of the melting point of said low melting point polyamide fiber to manufacture a fiber sheet having a thickness of 30mm, and a unit weight of 600g/m$^2$, using said melted low melting point polyamide fiber as a binder.

A treatment solution was prepared by mixing 70parts by mass of sulfomethylated phenol alkylresorcin-formaldehyde precondensation polymer (solid content: 40% by mass), 5parts by mass of "MATSUMOTO MICROSPHERE F-100" (trade name: Matsumoto Yushi Seiyaku Co., Ltd.) as thermoexpandable particles, 20parts by mass of "TERRAJU C-70" (trade name: BUDENHEIM IBERICA COMMERCIAL S. A.) as fire retardant capsules, and 5parts by mass of expandable graphite (temperature to start expansion: 300°C, expansion rate: 150 times, particle size: 45$\mu$m).

The resulting treatment solution was then impregnated into said fiber sheet in an amount of 40% by mass per unit weight as a solid and then heated and dried at 120 to 130°C for 5 minutes to precure said fiber sheet and put said precondensation polymer at its B-stage, obtaining a nonflammable fiber sheet.

The resulting fiber sheet was then left standing at room temperature for 10 days, 30 days, 60 days, and 180 days respectively, after that said fiber sheet was molded into a prescribed shape by hot pressing at 200°C for 60 seconds.

In said fiber sheet, no defect regarding moldability was identified and said fiber sheet could easily be molded into a prescribed shape.

The fire resistant property of said molded fiber sheet was V-0 in UL94 standard, with a ventilation resistance of 10.3kPa·s/m, said molded sheet having excellent acoustic absorptivity, weatherability and high rigidity, said molded sheet being useful as a nonflammable sound absorber for cars, building materials, and domestic electrical appliances.

EXAMPLE 14

A treatment solution was prepared by mixing 86parts by weight of sulfomethylated phenol-alkylresorcin-formaldehyde precondensation polymer (solid content 50% by mass), 3parts by mass of a fluorine group water-oil repellant agent (solid content 40% by mass), 3parts by mass of a carbon black dispersion (solid content 30% by mass), 2parts by mass of a wax group internal release agent, and 6parts by mass of a cyclic phosphoric ester as a softener.

Said treatment solution was then impregnated into a spunbonded polyester fiber nonwoven fabric having a unit weight of 40g/m$^2$, onto which a polyethylene fiber having a thickness of 20$\mu$m was laminated in an amount of 30% by mass per unit weight.

A water solution containing 10parts by mass of a novorac-type phenol resin powder (particle size: 50$\mu$m, softening point: 115-120°C) into which a hexamethylenetetramine was added as a hot met adhesive, 20parts by mass of "NONNEN R 948-5" (trade name, MARUBISHI OIL CHEMICAL CO., LTD.) as fire retardant capsules, 3parts by mass of cyclie phosphoric ester, as the other fire retardant, 3parts by mass of a carbon black dispersion (solid content 30% by mass) and 64parts by mass of water was prepared, said water solution being coated onto said polyethylene film on said nonwoven fabric by spraying in an amount of 100g/m$^2$, the resulting nonwoven fabric then being dried and precured at 130 to 140°C for 4 minutes, to put said sulfomethylated phenolalkylresorcin-formaldehyde precondensation polymer at its B-stage, to obtain a nonflammable nonwoven fabric sheet.

The resulting nonwoven fabric sheet was then used as a surface material, and said nonwoven fabric sheet was put onto a base material being a web of glass wool, having a unit weight of 600g/m$^2$ onto which a phenol resin was coated in an amount of 20% by mass per unit weight, so as to cause said polyethylene film on said nonwoven fabric sheet to contact said base material, and the resulting laminated material then being molded into a prescribed shape by hot pressing at 200°C for 60 seconds.

The resulting molded laminated material had a good interlaminar bonding strength between said surface material and said base material because said thermosetting-type hot melt adhesive was cured during said press molding, and even in a case where said laminated material was molded into a complex shape, the resulting molded laminated material could be easily released from its mold after hot pressing. Further, as a surface material said nonwoven fabric sheet was stable when left standing, and fire resistant property of said molded laminated material was V-0 in UL94 standard, with a ventilation resistance of 30.5kPa - s/m, said molded laminated material having an excellent acoustic absorptivity, and being useful as a hood silencer, dash outer silencer, dash silencer, cylinder head cover silencer, engine under cover silencer for a car.

EXAMPLE 15

Using a nonflammable nonwoven sheet from EXAMPLE 14 as a surface material, and using a fiber sheet from EXAMPLE 13 as a base material, the resulting laminated sheet was hot pressed into a prescribed shape at 200°C for 60seconds. The resulting molded laminated sheet could be easily released from its mold after hot pressing the same as in EXAMPLE 14, and its fire resistant property was V-0 in UL94 standard, with a ventilation resistance 40.6 kPa·s/m and said laminated sheet had good moldability after 6 months of being left standing at room temperature, said molded laminated sheet having good acoustic absorptivity, and being useful as a nonflammable sound absorber for cars, buildings, domestic electrical appliances, or the like.

EXAMPLE 16

A web consisting of 70% by mass of polyester fiber (fineness: 11detex, fiber length: 50mm) and 30% by mass of low melting point polyester fiber (fineness: 15detex, fiber length: 45mm) was used and said web was needle punched to manufacture a fiber sheet having a unit weight of 100g/m$^2$. A treatment solution was prepared by mixing 40parts by mass of sulfomethylated phenol-alkyl resorcin-formaldehyde precondensation polymer (solid content 50% by mass), 3 parts by mass of a fluorine group water-oil repellant agent (solid content 40% by mass), 2parts by mass of a carbonblack dispersion (solid content 50% by mass), 10parts by mass of cyclic phosphorie ester as a fire retardant, 3 parts by mass of wax emulsion (solid content 50% by mass) as a release agent and 42 parts by mass of water.
The resulting treatment solution (primary solution) was impregnated into said fiber sheet in an amount of 20% by mass per unit weight as a solid.
A treatment solution was prepared by mixing 20 parts by mass of "TERRAJU C-70" (trade name: BUDENHEIM IBERICA COMMERCIAL S. A.) as fire retardant capsules, 10 parts by mass of a polyamide powder (melting point: 130°C, particle size 10 to 30$\mu$m) as a hot melt adhesive, 2parts by mass of a carbon black dispersion (solid content 50% by mass) and 68parts by mass of water.
Said treatment solution (secondary solution) was spray coated onto one side of said fiber sheet into which said primary solution was impregnated, in an amount of 30% by mass per unit weight as a solid, after which said fiber sheet was then heated and precured at 130 to 140°C for 5 minutes, to put said precondensation polymer in said fiber sheet at its B-stage.
Using the resulting fiber sheet as a surface material, and using a glass wool web having a unit weight of 60g onto which a phenol resin was coated in an amount of 15% by mass per unit weight as a base material, and said fiber sheet was put onto said base material so as to cause the surface of said fiber sheet onto which said secondary solution was spray coated to contact the surface of said base material, after which the resulting laminated material was molded by hot pressing into a prescribed shape at 200°C for 50 seconds.
The fire resistant property of said molded laminated material was 5VA in UL94 standard, with a ventilation resistance of 9.6 kPa·s/m, said molded laminated material having an excellent acoustic abosorptivity, water proof property, weatherability and said molded laminated material being useful as a hood silencer, outer dash silencer, dash silencer and cowl side silencer for a car.

EXAMPLE 17

Said surface material of EXAMPLE 16 was put on the nonflammable fiber sheet from EXAMPLE 13 as a base sheet, and the resulting laminated sheet was then molded by hot pressing into a prescribed shape at 200°C for 50 seconds.
The fire resistant property of the resulting molded laminated sheet was 5VB in UL 94 standard, with a ventilation resistance of 10.3kPa·s/m, said molded laminated sheet having excellent acoustic absorptivity, water proof property, weatherability, and being useful as a hood silencer, outer dash silencer, dash silencer and cowl side silencer for a car.

EXAMPLE 18

A treatment solution was prepared by mixing 50parts by mass of sulfomethylated phenol-alkylresorcin -formaldehyde precondensation polymer (solid content 45% by mass), 3parts by mass of a fluorine group water-oil repellant agent (solid content 40% by mass), 2parts by mass of a carbon black dispersion (solid content 30% by mass), 20parts by mass of fire retardant capsules (trade name: TERRAJU C-70, BUDENHEIM IBERICA COMMERCIAL S. A.), 5parts by mass of cyclic phosphoric ester as the other fire retardant and 20parts by mass of water.
Said treatment solution was then impregnated into a polyurethane foam made of polyester polyol, having a thickness of 20mm, and a unit weight of 300g/m$^2$ in an amount so as to be 30% by mass for the total weight of said polyurethane foam as a solid, the resulting polyurethane foam into which said treatment solution was then impregnated was heated and precured at 130 to 145°C for 5 minutes to put said precondensation polymer in said polyurethane foam at its B-stage, to obtain a nonflammable porous sheet. The resulting porous sheet was then molded by hot pressing at 210°C for 60 seconds, to obtain a molded porous sheet having a thickness of 8mm.

COMPARISON 6

A molded porous sheet having a thickness of 8mm was prepared using the same procedure as in EXAMPLE 18 with the exception that polyammonium phosphate was used instead of said fire retardant capsules.

The molded porous material samples from EXAMPLE 18 and COMPARISON 6 were tested for their fire resistant property, the fire resistant property of the water-heat cycle, acoustic absorptivity, and ventilation property The results were shown in Table 6.

Table 6

| | Fire resistant property UL94 | Fire resistant property after w ater-heat cycle | Acoustic absorptivity (frequency Hz) | Ventilation resistance (kPa·s/m) |
|---|---|---|---|---|
| | | UL94 | 500 1000 6000 | |
| EXAMPLE 18 | V- 0 | V-0 | 25 75 98 | 2. 8 |
| COMPARISON 6 | V-0 | Combustion | 28 75 98 | 2. 9 |

Referring to Table 6, it was recognized that the sample from COMPARISON 6, in which said fire retardant used was not capsulated, had a much lower fire resistant property after water-heat cycle as compared to the sample from

EXAMPLE 17 in which fire retardant capsules covered by resin of good water repellency, were used.

EXAMPLE 19

Using said nonflammable porous sheet of EXAMPLE 18 as a base material, and using said nonflammable porous material sheet (nonflammable sheet) from EXAMPLE 8 as a surface material, said surface material was put on said base material and the resulting laminated material was then molded by hot pressing into a prescribed shape at 200°C for 60 seconds.

The fire resistant property of the resulting molded laminated material was V-0 in UL 94 standard, with a ventilation resistance of 3.6kPa·s/m.

Said molded laminated material had excellent acoustic absorptivity and water proof property, and was useful as a hood silencer, dash silencer, and head lining for a car.

EXAMPLE 20

A treatment solution (primary solution) was prepared by mixing 45parts by mass of sulfomethylated phenol-alkylresforma-formaldehyde precondensation polymer (solid content 50% by mass), 1part by mass of a carbon black dispersion (solid content 30% by niass), 3parts by mass of a fluorine group water-oil repellant agent (solid content 40% by mass) and 51 parts by mass of water.

Said treatment solution was then impregnated into spunbunded nonwoven polyester fiber fabric having a unit weight of 40g/m$^2$ in an amount of 15% by mass per unit weight as a solid.

A treatment water solution (secondary solution) containing 70parts by mass of a polyvinylalchol water solution (solid content 5% by mass, saponification value: 99mol%, 5parts by mass of polyamide (particle size: 20μm, melting point: 150°C) as a hot melt adhesive powder, and 25parts by mass of fire retardant capsules (trade name: TERRAJU C-70, BUDENHEIM IBERICA COMMERCIAL S. A.) was prepared.

Said secondary solution was then coated onto one side of said nonwoven fabric, so that the amount to be spray coated accounts for 20% by mass per unit weight of said nonwoven fabric, after which the resulting nonwoven fabric was then heated at 150°C for 5 minutes to dry, obtaining a nonflammable fiber sheet (a nonflammable porous sheet). A polyurethane foam made of polyetherpolyol having a thickness of 15mm, unit weight 200g/m$^2$) was used as a base material.

A treatment solution (primary solution) was prepared by mixing 45parts by mass of sulfomethylated phenol-alkylresorcin-formaldehyde precondensation polymer (solid content 50% by mass), 1part by mass of a carbon black dispersion (solid content 30% by mass), 3parts by mass of a fluorine group water-oil repellant agent (solid content 40% by mass) and 51parts by mass of water.

Said primary solution was then impregnated into said polyurethane foam, so that the amount to be coated accounts for 10% by mass for the total weight of said polyurethane foam as a solid.

A treatment water solution (secondary solution) containing 50parts by mass of a polyvinylalcohol water solution (5% by mass, saponificaction value: 99mol%), 20parts by mass of acrylic resin emulsion (solid content 50% by mass), 5parts by mass of polyamide (particle size: 20μm, melting point: 150°C) as a hot melt adhesive powder, 5 parts by mass of expandable graphite (temperature starting expansion: 300°C, expansion rate: 150 times, particle size: 40μm) and

20parts by mass of fire retardant capsules (trade name: TERRAJU C-70, BUDENHEIM IBERICA COMMERCIAL S.A.) was prepared.

Said secondary solution was impregnated into both sides of said polyurethane foam so that the amount to be spray coated accounts for 30% by mass (one side: 15% by mass) for the total weight of said polyurethane foam, and the resulting polyurethane foam was then heated at 150°C for 8minutes to dry, to obtain a nonflammable polyurethane foam (nonflammable synthetic resin foam sheet) as a base material.

Said nonflammable fiber sheets were put on both sides of said base material, so as to contact each of the backsides of said nonflammable fiber sheets, the resulting laminated material then being molded by hot pressing into a prescribed shape at 200°C for 60 seconds, to obtain a molded laminated material.

The fire resistant property of the resulting molded laminated material was

V-0 in UL 94 standard, with a ventilation resistance of 4.1kPa·s/m.

Said molded laminated material had excellent acoustic absorptivity and water proof property, and useful as hood silencer, dash silencer, engine undercover silencer, and head lining.

## POSSIBILITY OF INDUSTRIAL USE

Said porous sheet such as said fiber sheet, and said synthetic resin foam sheet or the like in the present invention have a high fire resistant property and a good acoustic absorptivity, so that said porous material is useful for a nonflammable sound absorber for a car, building or the like.

## Claims

1. A porous fire resistant sheet **characterized by** a synthetic resin film covering fire retardant capsules, causing said fire retardant capsules to adhere to porous material.

2. A porous fire resistant sheet in accordance with Claim 1, wherein said fire retardant capsules are added to said porous material in an amount of between 5% and 80% by mass.

3. A porous fire resistant sheet in accordance with Claim 1, wherein said fire retardant is water soluble and said synthetic resin film is water insoluble.

4. A porous fire resistant sheet in accordance with Claim 1, wherein said porous material is fiber.

5. A porous fire resistant sheet in accordance with any of Claims 1 to 4, wherein said fibers are all hollowed, or a mixture of solid and hollowed fibers.

6. A porous fire resistant sheet in accordance with any of Claims 1 to 5, wherein an additional fiber having a low melting point of below 180°C are mixed in with said fiber.

7. A porous fire resistant sheet in accordance with any of Claims 1 to 6, wherein synthetic resin binder is contained in said fiber in an amount of between 5 and 200 % by mass for fibers.

8. A porous fire resistant sheet in accordance with Claim 7, wherein said synthetic resin binder is water solution.

9. A porous fire resistant sheet in accordance with Claim 8, wherein water soluble resin is dissolved in said water solution.

10. A porous fire resistant sheet in accordance with Claims 9 or 10, wherein said synthetic resin binder is a phenolic resin, and said phenolic resin is sulfomethylated and/or sulfimethylated.

11. A porous fire resistant sheet in accordance with Claim 1, wherein said porous material is an expanded synthetic resin

12. A porous fire resistant sheet in accordance with Claim 11, wherein synthetic resin binder is contained in said expanded synthetic resin in an amount of between 5 and 200% by mass for said expanded synthetic resin.

13. A porous fire resistant sheet in accordance with Claim 12, wherein said synthetic resin binder is a water solution.

14. A porous fire resistant sheet in accordance with Claim 13, wherein water soluble synthetic resin is dissolved in said water solution.

**15.** A porous fire resistant sheet in accordance with Claim 12 or 13, wherein said synthetic binder is a phenolic resin and said phenolic resin is sulfomethylated and /or sulfimethylated.

**16.** A molded article wherein said porous fire resistant sheet; in accordance with any of Claims 1 to 15, is molded into a prescribed shape.

**17.** A molded article in accordance with Claim 16, wherein a ventilation resistance of said molded article is in the range of between 0.1 and 100kPa s/m.

**18.** A laminated material wherein other porous sheet(s) is (are) laminated onto one or both sides of said porous fire resistant sheet in accordance with any of Claims 1 to 15.

**19.** A laminated material in accordance with Claim 18, wherein other porous sheet(s) is (are) laminated onto one or both sides of said porous fire resistant sheet(s) through thermoplastic resin film(s) having a thickness of between 10 and 200$\mu$m.

**20.** A laminated material in accordance with Claim 19, wherein a hot melt adhesive powder is scattered onto one or both sides of said porous fire resistant sheet in an amount of between 1 and 100g/m$^2$, and said other porous material sheet(s) is (are) laminated onto said porous sheet through said scattered layer of hot melt adhesive powder.

**21.** A molded article wherein a laminated material in accordance with Claim 18 or 19 is molded into a prescribed shape.

**22.** A molded article in accordance with Claim 21, wherein a ventilation resistance of said molded article is in the range of between 0.1 and 100 kPa·s/m.

**23.** A fire resistant acoustic material for cars made of a molded article in accordance with any of Claims 16, 17, 21 and 22.

Fig. 1

## INTERNATIONAL SEARCH REPORT

| | International application No. |
|---|---|
| | PCT/JP2005/001808 |

A. CLASSIFICATION OF SUBJECT MATTER
Int.Cl$^7$ B32B5/18, B60R13/02, D06M11/72, 13/292, 15/41, 15/423, 23/12

According to International Patent Classification (IPC) or to both national classification and IPC

B. FIELDS SEARCHED

Minimum documentation searched (classification system followed by classification symbols)
Int.Cl$^7$ B32B5/18, B60R13/02, D06M11/72, 13/292, 15/41, 15/423, 23/12

Documentation searched other than minimum documentation to the extent that such documents are included in the fields searched
Jitsuyo Shinan Koho           1922-1996     Jitsuyo Shinan Toroku Koho     1996-2005
Kokai Jitsuyo Shinan Koho     1971-2005     Toroku Jitsuyo Shinan Koho     1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 9-13037 A  (Nippon Carbide Industries Co., Ltd.),<br>14 January, 1997 (14.01.97),<br>(Family: none) | 1-6,11-15<br>7-10,16-23 |
| X<br>Y | JP 11-323015 A  (Toray Industries, Inc.),<br>26 November, 1999 (26.11.99),<br>(Family: none) | 1-6,11-15<br>7-10,16-23 |
| Y | JP 2000-234271 A  (Nagoya Oilchemical Co., Ltd.),<br>29 August, 2000 (29.08.00),<br>(Family: none) | 7-10,16-23 |

☒  Further documents are listed in the continuation of Box C.          ☐  See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>12 May, 2005 (12.05.05) | Date of mailing of the international search report<br>31 May, 2005 (31.05.05) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2005/001808 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2000-327797 A (Nagoya Oilchemical Co., Ltd.), 28 November, 2000 (28.11.00), (Family: none) | 7-10,16-23 |

Form PCT/ISA/210 (continuation of second sheet) (January 2004)

**EP 1 733 827 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11061616 A
- JP 8039596 A
- JP 7126913 A
- JP 8027618 A
- JP 8260245 A